# EUROPEAN PATENT APPLICATION

(11) **EP 4 765 896 A1**
(43) Date of publication of application: **24.06.2026**
(21) Application number: 24854349.8
(22) Date of filing: 30.07.2024
(51) Int. Cl.: H04W 4/40, H04W 4/02, G08G 1/16, B60W 30/08

(54) **METHOD AND APPARATUS FOR PERFORMING DIFFERENTIAL OPERATION ON BASIS OF CONFIDENCE VALUE OF INFORMATION**

(30) Priority: 14.08.2023 KR 20230106290
(71) Applicant: LG Electronics Inc., Yeongdeungpo-gu Seoul 07336 (KR)
(72) Inventor: BYUN, Jaihyun, Seoul 06772 (KR); SEO, Hanbyul, Seoul 06772 (KR); KIM, Yunjong, Seoul 06772 (KR)
(74) Representative: Mooser, Sebastian Thomas
(86) International application number: PCT/KR2024/011086
(87) International publication number: WO 2025/037797

(57) **Abstract**

Provided are a method by which a first device performs wireless communication and an apparatus supporting same. The method may comprise the steps of: acquiring configuration information related to a traveling operation that is set for each of a plurality of confidence levels; receiving information from a second device; acquiring a confidence level related to the information; and on the basis that the confidence level related to the information is a first confidence level from among the plurality of confidence levels, performing a first traveling operation that is set for the first confidence level. For example, the confidence level may be acquired on the basis of at least one of a long-term evaluation factor and a short-term evaluation factor.

## Description

### TECHNICAL FIELD

This disclosure relates to a wireless communication system.

### BACKGROUND ART

5G NR is a successive technology of long term evolution (LTE) corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with machine learning capabilities. The vision of the 6G system can have four aspects: intelligent connectivity, deep connectivity, holographic connectivity, and ubiquitous connectivity, and the 6G system can satisfy the requirements as shown in Table 1 below. In other words, Table 1 is an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

In one embodiment, provided is a method for performing wireless communication by a first device. The method may comprise: obtaining configuration information related to a driving operation configured for each of a plurality of reliabilities; receiving, from a second device, information; obtaining a reliability related to the information; and performing a first driving operation configured for a first reliability, based on the reliability related to the information being the first reliability among the plurality of reliabilities. For example, the reliability may be obtained based on at least one of a long-term evaluation factor or a short-term evaluation factor.

In one embodiment, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: obtaining configuration information related to a driving operation configured for each of a plurality of reliabilities; receiving, from a second device, information; obtaining a reliability related to the information; and performing a first driving operation configured for a first reliability, based on the reliability related to the information being the first reliability among the plurality of reliabilities. For example, the reliability may be obtained based on at least one of a long-term evaluation factor or a short-term evaluation factor.

In one embodiment, provided is a processing device configured to control a first device. The processing device may comprise: at least one processor; and at least one memory connected to the at least one processor and storing instructions. For example, the instructions, based on being executed by the at least one processor, cause the first device to perform operations comprising: obtaining configuration information related to a driving operation configured for each of a plurality of reliabilities; receiving, from a second device, information; obtaining a reliability related to the information; and performing a first driving operation configured for a first reliability, based on the reliability related to the information being the first reliability among the plurality of reliabilities. For example, the reliability may be obtained based on at least one of a long-term evaluation factor or a short-term evaluation factor.

In one embodiment, provided is a non-transitory computer-readable storage medium recording instructions. For example, the instructions, based on being executed, cause a first device to perform operations comprising: obtaining configuration information related to a driving operation configured for each of a plurality of reliabilities; receiving, from a second device, information; obtaining a reliability related to the information; and performing a first driving operation configured for a first reliability, based on the reliability related to the information being the first reliability among the plurality of reliabilities. For example, the reliability may be obtained based on at least one of a long-term evaluation factor or a short-term evaluation factor.

### BRIEF DESCRIPTION OF THE DRAWINGS

FIG. 1 shows a communication structure that can be provided in the 6G system, based on an embodiment of the present disclosure.
FIG. 2 shows an electromagnetic spectrum, based on an embodiment of the present disclosure.
FIG. 3 shows an example of a typical NTN scenario based on a transparent payload, based on an embodiment of the present disclosure.
FIG. 4 shows an example of a typical NTN scenario based on a regenerative payload, based on an embodiment of the present disclosure.
FIG. 5 shows an example of utilization of a V2X service according to accuracy of V2X data exchanged on a road.
FIG. 6 shows a method in which an RSU disseminates sensor information on a road including a crosswalk, based on an embodiment of the present disclosure.
FIG. 7 shows a method in which an RSU disseminates sensor information on a road including a crosswalk, based on an embodiment of the present disclosure.
FIG. 8 shows a method using MAP and/or SPaT, based on an embodiment of the present disclosure.
FIG. 9 shows a method in which an RSU transfers road construction information and/or a method in which a vehicle transfers pothole information, based on an embodiment of the present disclosure.
FIG. 10 shows a method using a maneuver coordination message, based on an embodiment of the present disclosure.
FIG. 11 shows a flow chart of a method of differentially performing a service/application/function according to a reliability value of data/information, based on an embodiment of the present disclosure.
FIG. 12 shows a method for performing wireless communication by a first device, based on an embodiment of the present disclosure.
FIG. 13 shows a method for performing wireless communication by a second device, based on an embodiment of the present disclosure.
FIG. 14 shows a communication system 1, based on an embodiment of the present disclosure.
FIG. 15 shows wireless devices, based on an embodiment of the present disclosure.
FIG. 16 shows a signal process circuit for a transmission signal, based on an embodiment of the present disclosure.
FIG. 17 shows another example of a wireless device, based on an embodiment of the present disclosure.
FIG. 18 shows a hand-held device, based on an embodiment of the present disclosure.
FIG. 19 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configured or defined" may be interpreted as being configured or pre-configured to a device through pre-defined signaling (e.g., SIB, MAC, RRC) from a base station or network. In the present disclosure, "configured or defined" may be interpreted as being pre-configured to a device.

The technology proposed in the present disclosure may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), long term evolution (LTE), 5G NR, and so on.

The technology proposed in the present disclosure may be implemented as 6G wireless technology and may be applied to various 6G systems. For example, 6G systems may have key factors such as enhanced mobile broadband (eMBB), ultra-reliable low latency communications (URLLC), massive machine-type communication (mMTC), artificial intelligence (AI) unified communications, tactile internet, high throughput, high network capacity, high energy efficiency, low backhaul and access network congestion, and enhanced data security.

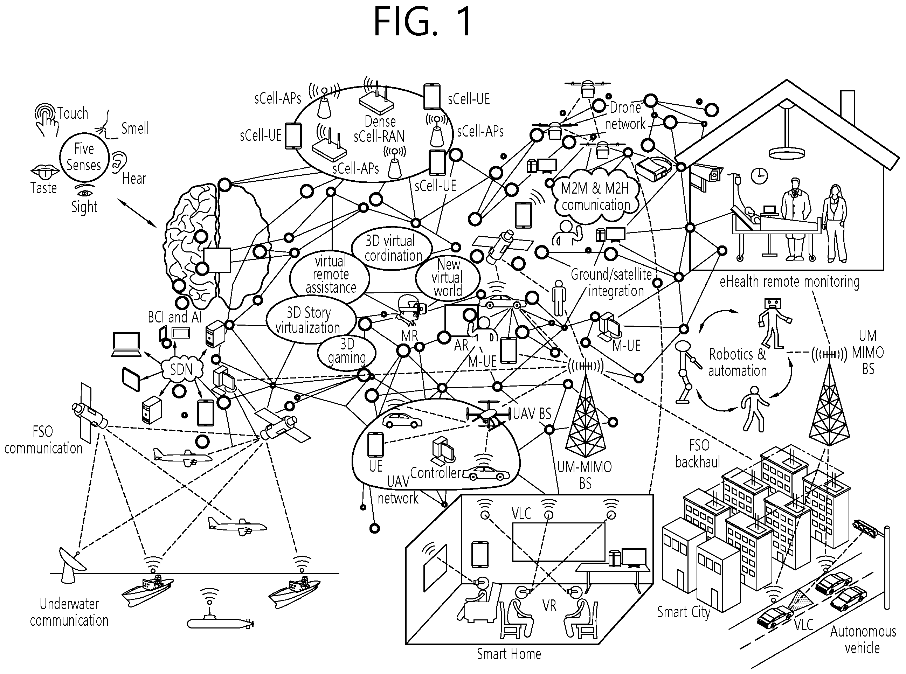

FIG. 1 shows a communication structure that can be provided in the 6G system, based on an embodiment of the present disclosure. The embodiment of FIG. 1 may be combined with various embodiments of the present disclosure.

New network characteristics in 6G may include:
- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each procedure of signal processing, which will be described below).
- Seamless integration wireless information and energy transfer
- Ubiquitous super 3D connectivity: Access to drones, networks for very low Earth orbit satellites and core network functions will create super 3D connectivity in 6G ubiquitous.

In the above new network characteristics of 6G, some general requirements may be as follows.
- Small cell networks
- Ultra-dense heterogeneous network
- High-capacity backhaul
- Radar technology integrated with mobile technology: High-precision localization (or location-based services) through communication is one of the functions of the 6G wireless communication system. Therefore, radar systems will be integrated with 6G networks.
- Softwarization and virtualization

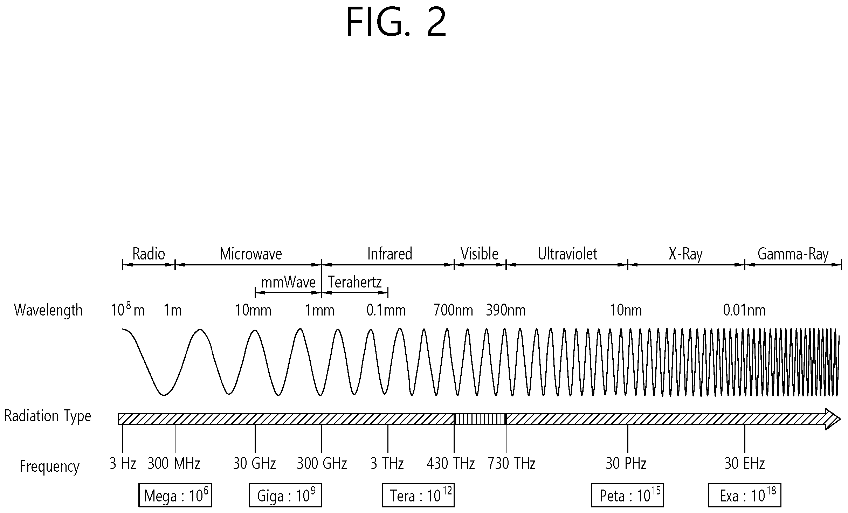

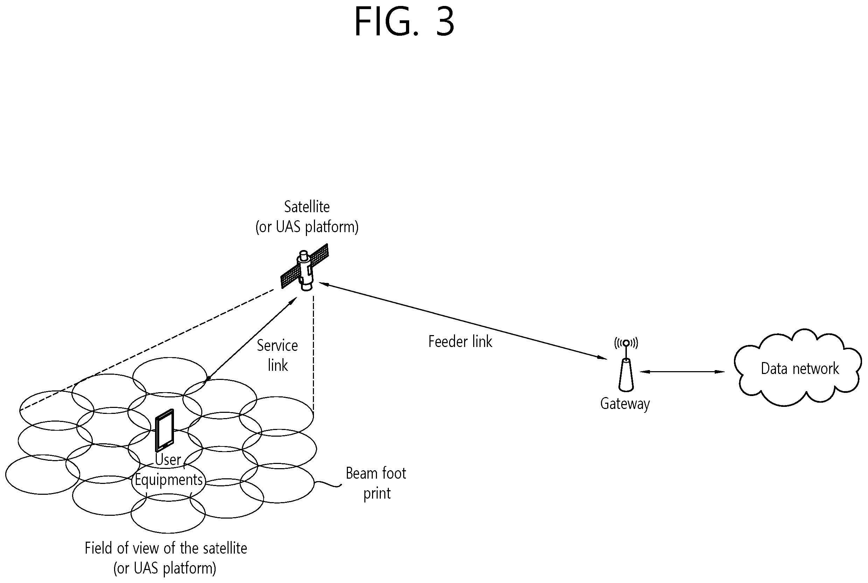

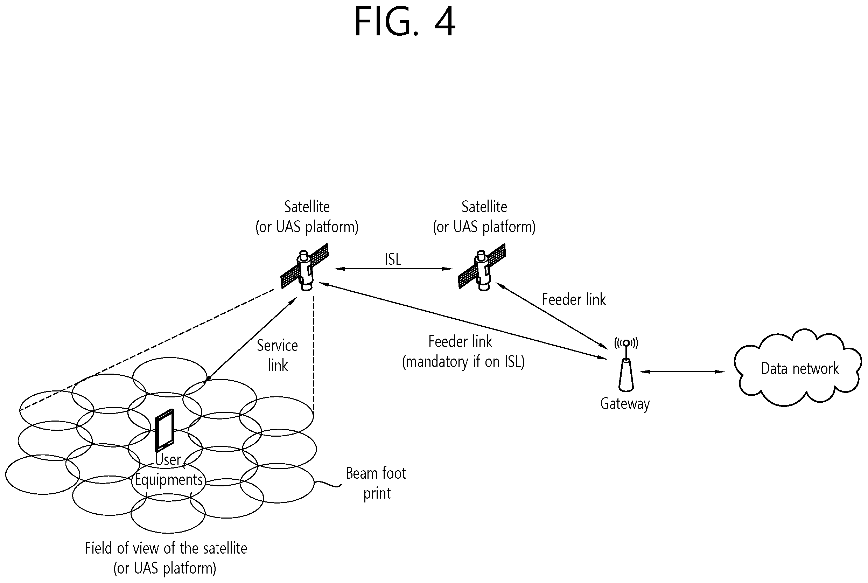

The following describes the key enabling technologies for 6G systems.
- Artificial Intelligence: The introduction of AI in telecommunications can streamline and improve real-time data transfer. AI can use numerous analytics to determine how complex target tasks are performed, meaning AI can increase efficiency and reduce processing delays. Time-consuming tasks such as handover, network selection, and resource scheduling can be done instantly by using AI. AI can also play an important role in M2M, machine-to-human, and human-to-machine communications. In addition, AI can be a rapid communication in Brain Computer Interface (BCI). AI-based communication systems can be supported by metamaterials, intelligent structures, intelligent networks, intelligent devices, intelligent cognitive radios, self-sustaining wireless networks, and machine learning.
- THz Communication (terahertz communication): Data rates can be increased by increasing bandwidth. This can be accomplished by using sub-THz communication with a wide bandwidth and applying advanced massive MIMO technology. THz waves, also known as submillimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. Of the defined THz band, 300 GHz-3 THz is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies, for which highly directive antennas are indispensable. The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO Technology (Large-scale MIMO)
- Hologram Beamforming (HBF, Hologram Beamforming)
- Optical wireless technology
- Free-space optical transmission backhaul network (FSO Backhaul Network)
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- Unmanned aerial vehicles (UAVs): UAVs or drones will be an important component of 6G wireless communications. In most cases, high-speed data wireless connectivity may be provided using UAV technology. Base Station (BS) entities may be installed on UAVs to provide cellular connectivity. UAVs may have certain features not found in fixed BS infrastructure, such as easy deployment, strong line-of-sight links, and controlled degrees of freedom for mobility. During emergencies, such as natural disasters, the deployment of terrestrial telecom infrastructure is not economically feasible and sometimes cannot provide services in volatile environments. UAVs can easily handle these situations. UAVs will be a new paradigm in wireless communications. This technology facilitates the three basic requirements of wireless networks, which are eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Autonomous Driving (autonomous driving, self-driving): Vehicle to Everything (V2X), a key element in building an autonomous driving infrastructure, can be a technology that enables vehicles to communicate and share information with various elements on the road, such as vehicle-to-vehicle (V2V) and vehicle-to-infrastructure (V2I) wireless communication, in order to perform autonomous driving. In order to maximize the performance of autonomous driving and ensure high safety, fast transmission speeds and low latency technologies are essential. In addition, in the future, autonomous driving may need to go beyond delivering warnings or guidance messages to the driver and actively intervene in vehicle operation, requiring direct control of the vehicle in dangerous situations. To do this, the amount of information that needs to be transmitted and received can be massive, so 6G is expected to maximize autonomous driving with faster transmission speeds and lower latency than 5G.
- Non-terrestrial networks (NTN): An NTN may represent a network or network segment that uses radio frequency (RF) resources mounted on a satellite (or unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or UAS platform) may establish a service link with a UE. The satellite (or UAS platform) may be connected to the gateway via a feeder link. The satellite may be connected to the data network via the gateway. A beam footprint may refer to an area that can receive signals transmitted by a satellite. Referring to FIG. 4, a satellite (or UAS platform) may create a service link with a UE. A satellite (or UAS platform) connected to a UE may be connected to other satellites (or UAS platforms) via inter-satellite links (ISL). Other satellites (or UAS platforms) can be connected to the gateway via feeder links. Satellites may be connected to data networks via other satellites and gateways, based on the regenerative payload. If an ISL does not exist between a satellite and another satellite, a feeder link between the satellite and the gateway may be required. FIG. 3 and FIG. 4 are only examples of NTN scenarios, and NTN can be implemented based on various types of scenarios. For example, a satellite (or UAS platform) may implement a transparent or regenerative (with on-board processing) payload. For example, a satellite (or UAS platform) may generate multiple beams over a designated service area based on the field of view of the satellite (or UAS platform). For example, the field of view of the satellite (or UAS platform) may be different based on the on-board antenna diagram and the minimum elevation angle. For example, transparent payloads may include radio frequency filtering, frequency conversion, and amplification. Accordingly, the waveform signal repeated by the payload may not be changed. For example, a regenerative payload may include radio frequency filtering, frequency conversion and amplification, demodulation/decryption, switching and/or routing, and coding/modulation. For example, a regenerative payload may be substantially equivalent to equipping a satellite (or UAS platform) with all or part of the base station functionality.
- Integrated sensing and communication (ISAC): Wireless sensing is a technology that obtains information about the environment and/or the characteristics of objects within the environment by using radio frequencies to determine the instantaneous linear speed, angle, and distance (range) of the object. Since the radio frequency sensing function does not require connection to the object through a device in the network, it can provide a service for determining the location of the object without a device. The function to obtain range, speed, and angle information from radio frequency signals can provide a wide range of new capabilities, such as detection of various objects, object recognition (e.g., vehicles, humans, animals, UAVs), and high-precision positioning, tracking, and activity recognition. Wireless sensing services can provide information to various industries (e.g., unmanned aerial vehicles, smart homes, V2X, factories, railroads, public safety, etc.), enabling applications that provide, for example, intruder detection, assisted vehicle control and navigation, trajectory tracking, collision avoidance, traffic management, health and traffic management, etc. In some cases, wireless sensing may use non-3GPP type sensors (e.g., radar, cameras) to further support 3GPP-based sensing. For example, the operation of a wireless sensing service, that is, the sensing operation, may depend on the processing of transmission, reflection, and scattering of wireless sensing signals. Therefore, wireless sensing may provide an opportunity to enhance existing communication systems from communication networks to wireless communication and sensing networks.

Meanwhile, with evolution of communication technology, services using communication technology are being developed also in a mobility field including vehicles, robots, and drones, and driving performance such as remote driving, cooperative driving, and autonomous driving is being improved. In particular, services of an Intelligent Transport System (ITS) and V2X services are also being developed together. In order to use V2X services, messages may be exchanged between road users (e.g., vehicles, pedestrians, two-wheeled vehicles, robots, etc.) or between road users and infrastructure (e.g., RSU, MEC, server, cloud, etc.), and data/information required for services may be utilized from the exchanged messages. For example, a road user may transfer its state information (e.g., awareness information) to surrounding road users or infrastructure in a message (e.g., Cooperative Awareness Message (CAM), Vulnerable Road User Awareness Message (VAM)), Basic Safety Message (BSM), Pedestrian Safety Message (PSM)). Here, the state information may include a type, a size, a position, a speed, an acceleration, a direction, and a route of a transmitter. A UE (e.g., a road user, infrastructure, etc.) that has received a message of a road user may interpret the received message and may recognize a situation on a road by utilizing state information of the transmitter. As another example, state information of an object (e.g., a road user, an obstacle, etc.) sensed by a sensor (e.g., a camera, a radar, a LiDAR, etc.) mounted on a transmitter may be transferred in a message (e.g., Collective Perception Message (CPM), Sensor Data Sharing Message (SDSM)). For example, a situation on a road may be recognized by utilizing information obtained through exchange of messages including state information of an object sensed by a transmitter. Based on information obtained through exchange of the messages described above, a receiver may operate/perform various services/applications/functions. For example, based on received V2X data/information, a warning for collision avoidance and/or an emergency braking function may be operated. As another example, infrastructure may transmit a message (Signal Phase And Timing Extended Message (SPATEM)) including signal information (Signal Phase And Timing (SPAT)) and a message (MAP Extended Message (MAPEM)) including map information (MAP), and a road user may receive the messages. A receiver may operate services/applications/functions of the receiver (for example, a signal information display, an optimal speed recommendation function using signal information, etc.) by utilizing the received messages. In addition, there may be services/applications/functions (e.g., automated valet parking) that are provided by exchanging messages (e.g., Park Control Infrastructure Message (PCIM), Park Control Vehicle Message (PCVM)) including sensor information and control/command information for remote operated driving.

Meanwhile, although many ITS services and V2X services/applications/functions are being developed, levels of availability, accuracy, quality, and integrity of data/information exchanged for the services described in the conventional technology described above may vary. For example, since all or part of data/information included in exchanged V2X messages is measured and configured based on sensors of a transmitter, accuracy, quality, and integrity of information generated by the transmitter may vary depending on performance/capability of various sensors (e.g., availability, accuracy, reliability, resolution, etc.). In addition, for example, false positive information and false negative information may exist among information provided by V2X data. For example, in an ITS service that recognizes object information having accident risk on a road using sensors and artificial intelligence technology, false positive information (intentional or unintentional) that an object exists although the object does not actually exist or false negative information (intentional or unintentional) that an object does not exist although the object actually exists may be generated and propagated. In addition, for example, in terms of functional safety, uncertainty with respect to integrity of data/information including accuracy and quality diversity of information according to performance of a communication UE (e.g., hardware, software) and external cyber attacks (e.g., tampering) in terms of security may also exist. For example, due to factors that may occur in transfer of the indicated information, a receiver may have difficulty in whether to utilize received data/information for its service/application/function. In other words, a receiver/information user that is a target of interaction with exchanged data/information may have a trust problem with respect to a transmitter and/or a V2X message/data/information transmitted by the transmitter, that is, a problem regarding to what extent the receiver may trust the received data/information may occur. Such a problem is becoming more important not only within one system but also in an ITS in which multiple UEs/nodes/entities/ITS-stations/sub systems interact with each other. Furthermore, for example, a problem may occur regarding whether information received by a service/application/function within one UE/node/entity/ITS-station/sub system is usable or how the information is to be utilized. For example, when driving-related safety functions are incorrectly activated or deactivated, such as false alarms or missed collision alerts, due to data/information having low reliability (e.g., false positive, false negative), safety issues may occur. In particular, for example, in some systems that rely on V2X messages, even in a system without communication errors, if information derived from a message is interpreted as incorrect information with respect to an environment, a risk may be caused.

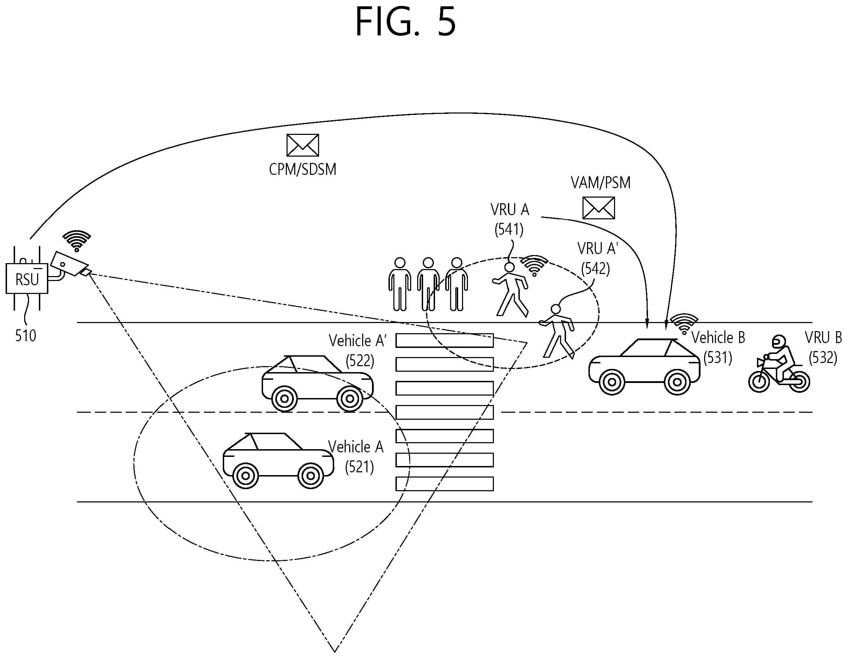

FIG. 5 shows an example of utilization of a V2X service according to accuracy of V2X data exchanged on a road.

Referring to FIG. 5, for example, infrastructure (e.g., RSU 510) may transmit, to surrounding communication UEs (e.g., vehicle B 531, Vulnerable Road User (VRU) B 532), a message (e.g., CPM, SDSM) including object information (e.g., vehicle A 521) sensed by its sensors (e.g., camera, radar, LiDAR, etc.). Additionally, for example, a road user (e.g., VRU A 541 or vehicle B 531) may transmit, to surrounding communication UEs, a message such as CAM, BSM, VAM, or PSM including its state information. In this case, for example, vehicle B 531 may recognize that an object (e.g., a vehicle, a pedestrian, a bicycle) exists at a nearby location or on a driving path based on V2X data/information included in received messages (e.g., CPM/SDSM, VAM/PSM), and vehicle B 531 may operate a service/application/function for collision avoidance by utilizing the information. For example, a warning (e.g., display, warning sound, vibration) notifying a collision possibility may be provided to a driver of the vehicle, or an emergency braking function may be activated to stop the vehicle in order to avoid a collision. Alternatively, for example, in a case of an autonomous driving system, a driving path may be changed or braking may be performed in order to avoid a collision based on the information. For example, as described above, a case in which a reliability value (e.g., including accuracy, quality, integrity) of V2X data/information is low may occur, and referring to FIG. 5, a situation may occur in which, for various reasons (e.g., low performance of a camera, bad weather), a camera installed in RSU 510 incorrectly recognizes a location of vehicle A 521 as vehicle A' 522 (i.e., an actual location is vehicle A 521) and generates a message (e.g., CPM, SDSM) and transfers the message to vehicle B 531. Additionally, for example, in a case of VRU A 541, it is located on the road (i.e., VRU A 541 on the road), but due to an error in GNSS, for example, a message may be generated with the location value of VRU A' 542 on the road and transmitted to vehicle B 531. That is, for example, although objects (e.g., vehicle A 521 and VRU A 541) having an actual collision risk on a driving path of vehicle B 531 do not exist, a case may occur in which information indicating that objects exist on the path vehicle A' 522 and VRU A' 542 is received. In this case, for example, vehicle B 531 may receive inaccurate information through a V2X message and may operate various services/applications/functions based on the information. For example, referring to FIG. 5, vehicle B 531 may recognize incorrect locations of objects (e.g., VRU A' 542 and vehicle A' 522), and an incorrect collision warning may be provided to a driver or an emergency braking function may be incorrectly activated. In such a case, for example, a driver may perform sudden braking, and a dangerous situation may occur for the driver or passengers, or when emergency braking of vehicle B 531 is incorrectly activated, another road user VRU B 532 driving behind may not predict this and an additional dangerous collision situation may occur. For example, assuming a case opposite to the case described above, although a pedestrian actually exists on a roadway, when a message including location information indicating that the pedestrian exists on a sidewalk is transmitted due to incorrect location information, that is, in FIG. 5, although the pedestrian is actually located at a position of VRU A' 542, when a V2X message is transmitted including a location value of VRU A 541, a collision risk exists on a driving path of a receiver vehicle B 531, but object information having a collision risk with the vehicle may be omitted from received data/information, and the vehicle that has received the message may fail to activate a service/application/function for collision avoidance. For example, vehicle B 531 may fail to provide a warning notifying a collision risk to a driver, and an emergency braking function may not be activated, so that a collision with a pedestrian (e.g., VRU A' 542) may occur. For example, the case described above may be more dangerous in autonomous driving that operates based on received information than in a service/application/function that provides a warning to a driver and operates based on a judgment of the driver.

A technical problem addressed in the present disclosure is that, when messages/data/information are exchanged among multiple entities and decisions are performed to operate services/applications/functions by utilizing the exchanged information, particularly in a case of safety-related functions, although reliability of information may act as a more important factor, there is not only no mutually agreed method for measuring/evaluating reliability of information yet, but also technology for how to utilize a reliability value of information is insufficient. Such a problem may occur in communication between road users or between a road user and infrastructure (e.g., RSU, MEC, server), and in order to solve this problem, many countries, companies, or organizations are conducting research. For example, if the problems described above are not solved through exchange of messages, information that may be obtained by exchanging V2X messages may not be utilized for safety-related services/applications/functions or may be utilized only in a limited manner.

In the present disclosure, a method of differentially operating a service based on reliability related to received information and a device supporting the same are proposed as follows.

For example, in the present disclosure, a reliability value of V2X data/information (e.g., trust level/trust value/level of trust/value of trust/trustworthiness) may be measured/evaluated, and services/applications/functions may be differentially operated based on the reliability value. For example, a differential operation method for a reliability value of V2X data/information of the present disclosure may be configured, in a receiver operation method of operating services/applications/functions differently according to the reliability value, with steps of measuring/evaluating, by a transmitter and/or a receiver, a reliability value of each piece of information, classifying each reliability value of data/information into multiple levels, configuring an operation corresponding to each reliability value, and operating according to the configuration based on a reliability value of received information. For example, this may mean that, when a reliability value for data/information obtained by receiving a V2X message is obtained, services/applications/functions are operated/executed in various manners according to the configured information. For example, when services/applications/functions operated in device A are differentially operated according to a reliability value of a transmitter (e.g., device B) or V2X data/information received by a receiver (e.g., device A), if a reliability value of data/information transmitted by device B is high, device A may omit and/or simplify a reconfirmation operation for received information (e.g., reconfirmation through a sensor installed in device A, or reception of a plurality of identical information) in operating/performing services/applications/functions, and/or may maximize a performance/operational availability range related to operation/performance of services/applications/functions (e.g., rapid acceleration, deceleration, or direction change). For example, contrary to the case described above, if a reliability value of data/information received by device A is low, device A may perform services/applications/functions after performing a reconfirmation operation for received information (e.g., reconfirmation through a sensor installed in device A, or reception of a plurality of identical information), and/or may minimize a performance/operational availability range related to operation/performance of services/applications/functions (e.g., limited acceleration, deceleration, direction change).

A step of measuring/evaluating a reliability value of V2X data/information may be as follows.

For example, in order to measure/evaluate a reliability value of V2X data/information, first, a reliability value related to exchange of V2X data/information may be defined, with respect to information exchange between a transmitter (e.g., an information provider) and a receiver (e.g., an information user), as a value/level/grade in which the receiver may measure/evaluate and/or detect availability, accuracy, quality, integrity, and the like of contents of information transmitted from another UE/node/entity/source. That is, for example, this may be regarded as a metric indicating whether information included in a message and/or information derived through a message is content that may be relied on when being utilized for a specific service/application/function of the receiver. For example, this may be a value considering various factors that affect generation of information, such as factors (and/or values) such as insufficient performance of a system that generates and/or configures information, situation awareness errors, security vulnerabilities, communication failures, operation errors of an external system, or environmental factors (e.g., surrounding environments such as weather, climate, or magnetic interference). However, for example, the reliability value described above may depend on a transmitter (e.g., an information provider), information generated by the transmitter, and an environment of the transmitter, and may not be affected by characteristics and an environment of a receiver (e.g., an information user). For example, reliability of V2X data/information may, in terms of functional safety and safety of the intended functionality, mean reliability including additional contents of received V2X data (e.g., information on an intended functionality, information on required quality and accuracy, information on a data generation method, or information on system development, implementation, maintenance, or operation processes).

For example, a reliability value may be typically represented in a form of a value, a probability, a likelihood, a degree, a percentage, or a level, but may also be represented in various other manners. For example, in embodiment(s) of the present disclosure, a reliability value is described as being represented as a value between 0 and 1, where "0" may mean low reliability and "1" may mean maximum reliability.

For example, in measuring/evaluating a reliability value, what is most importantly considered may be accuracy of transferred data/information (e.g., including integrity, accuracy, reliability, etc.). For example, when only a part of actual information is transferred, when other/incorrect information is transferred intentionally or unintentionally, in a case of false positive or false negative, or when an error of dynamic information (e.g., position, speed, direction) is large, a reliability value of data/information may be measured/evaluated to be low. However, for example, a case in which an accurate value/actual value (e.g., an accurate position value) of data/information is known is very rare, and since a measurement error of a sensor (e.g., a GNSS error) exists in most cases, alternative measurement factors for measuring/evaluating a reliability value of data/information may be required. For example, performance of a data/information provider in performing a specific function (e.g., capability and availability of a sensor, capability and availability of communication), and/or, in a case of artificial intelligence-based object recognition, a confidence score, average precision (AP), and/or an intention/requirement/expectation of the data/information provider regarding use of data/information by a data/information user may become (alternative measurement factors for measuring/evaluating a reliability value of data/information). For example, when providing information, an information provider may intend/require/expect that a receiver (e.g., an information user) utilizes provided data/information for a service/application/function with high reliability/assurance. In addition, for example, although a reliability value of V2X data/information is basically based on evaluation of data/information, evaluation of a transmitter may also be considered, and the reliability value may be calculated by considering not only raw data of a sensor but also processed data. For example, factors for evaluating a reliability value may be classified into a "long-term valid trust factor" based on characteristics and static information of a transmitter in generating data/information, and a "short-term valid trust factor" based on dynamic information in generating data/information by the transmitter. For example, in measuring/evaluating a reliability value, at least one or more of factors listed below may be included, and a reliability value may be derived through composite calculation.

For example, reliability value evaluation factors may be as follows. Meanwhile, details, terms, or classification criteria related to the reliability value evaluation factors below are merely examples, and the method proposed in the present disclosure is not limited to the reliability value evaluation factor(s) below.

### 1. Long-term valid trust factor

### (1) Performance/specification of a device (e.g., a sensor, a camera, or a communication module) that generates and transfers information

For example, there may be a measurement range, a resolution, and/or an object recognition success rate of an artificial intelligence learning model of a radar, and/or accuracy of a positioning sensor, and as performance/specification of a sensor is higher, a reliability value of measured data/information may be improved. Conversely, for example, as performance/specification of a sensor is lower, a reliability value of measured data/information may be reduced.

For example, a reliability value of data/information may be improved by providing a source of information (e.g., a type of a sensor) and/or a specification.

(2) A level of management, development, production, operation, service, and disposal processes corresponding to a product life cycle of a system/sub-system for generating and/or transferring data/information (of a transmitter) and/or a service/application/function using data/information (of a receiver), and/or a development level compliant with hazard analysis and risk assessment (HARA) for functional safety and a safety integrity level (SIL)

For example, in a case of an automobile, if the automobile is developed and implemented in compliance with a vehicle functional safety international standard (ISO 26262) after determining an integrity level through hazard analysis (e.g., automotive safety integrity level (ASIL)-D), a reliability value of data/information may be improved. For example, as a contrary example, if an integrity level is quality management (QM) (e.g., ASIL-QM), a reliability value of data/information may be reduced.

For example, in maintenance and/or management of a system, when the system is capable of self-checking, correcting, and repairing failures of the system, a reliability value of data/information may be improved.

For example, since performance degradation may occur according to an aging level of a system, a reliability value may be reduced according to the aging level of the system. Conversely, for example, in a case of a system incorporating latest technology, a reliability value may be improved.

(3) An error control scheme of a transmitter system and/or a certification system and/or a cryptographic level

For example, in transmitting data/information, in a case of a system in which a scheme for checking errors (e.g., parity check, cyclic redundancy check (CRC), checksum) is applied and a function for correcting errors (e.g., forward error correction (FEC), backward error correction (BEC)) is provided, a reliability value of data/information may be higher than that of a system without such functions.

For example, for encryption, since SHA512 (a cryptographic method that generates a 512-bit hash value) may better detect errors or tampering of data/information than SHA256 (a cryptographic method that generates a 256-bit hash value) a reliability value of data/information may be improved.

For example, in a case of a system to which quantum cryptography utilizing quantum mechanical characteristics is applied, a reliability value of data/information may be improved compared to conventional cryptographic methods.

(4) An evaluation of a transmitter provided by a reputation based system and a behavior based system

For example, reputation information of a transmitter may be collected by a third independent entity (e.g., a certification authority), and an evaluated value may be transferred to a receiver. For example, the receiver may reflect such a value in a reliability value of data/information transmitted by the transmitter.

(5) An evaluation of a transmitter from interaction data/meta data

For example, accumulated interaction data obtained by a receiver providing feedback on validity and/or reliability of data/information with respect to a message transmitted by a transmitter may be utilized to reflect in a reliability value of received data/information.

### 2. Short-term valid trust factor

### (1) A processing level of sensor data

For example, when a source of transmitted data/information includes a post-processing process (e.g., a Kalman filter, data fusion, a noise removal filter) rather than being raw data obtained from a sensor, a reliability value of the data/information may be improved.

For example, when transmitted data/information is double-checked by multiple sensors, a reliability value may be improved. For example, when information obtained by recognizing an object based on a camera is reconfirmed by a radar, a LiDAR, or an ultrasonic sensor, or vice versa, a reliability value of data/information may be higher than in a case sensed by a single sensor.

For example, when artificial intelligence is applied, completeness of an artificial intelligence model (e.g., average precision) may be reflected in a reliability value of processed data/information.

### (2) Information on an environment in which a sensor operates

For example, a transmitter may reflect, in a reliability value, information on an environment in which a sensor operates and corresponding performance information of the sensor (e.g., a performance metric according to an operating environment).

For example, in a case of a positioning sensor, when there exist obstacles that interfere with reception of a signal (e.g., indoor environments or urban canyon environments in a case of GNSS) and/or signal sensitivity and/or the number of connected anchors (e.g., satellites in a case of GNSS, or base stations in a case of radio frequency (RF)-based positioning technology), such environmental information may be reflected in a reliability value.

For example, in a case of LiDAR or a camera, performance (e.g., object recognition) may be affected depending on measurement conditions (e.g., illumination, rain, fog, radio interference, temperature, humidity). For example, sensor operating conditions that affect performance of a sensor may be reflected in a reliability value. For example, data/information measured by a camera under low illumination in the evening and rainy conditions may have a lower reliability value than data/information measured under high illumination and non-rainy conditions.

For example, when there is performance degradation due to mobility/motion of a host on which a sensor is installed and/or due to relativity, mobility/motion information (e.g., position, absolute speed, absolute direction change, or shaking including yawing, rolling, pitching, and bouncing) and/or relativity between the sensor and a measured object (e.g., distance, relative speed, relative direction change) may be reflected in a reliability value. For example, data/information in which an object is recognized by a sensor of a vehicle driving at a low speed may have a higher reliability value than data/information in which an object is recognized by a sensor of a vehicle driving at a high speed.

For example, when a transmitter is aware of situational awareness information of a sensor operating situation, a reliability value of data/information transferred by sensor data processed in consideration of such information may be higher than a reliability value of data/information without surrounding situational awareness.

### (3) Information on an intended functionality of data/information

For example, when a receiver receives data/information generated by a transmitter and utilizes the data/information for its service/application/function, an intended use/requirement/expectation and/or uncertainty regarding use of the data/information by the receiver, as expected by the transmitter, may be reflected in a reliability value. For example, when a transmitter does not expect abrupt driving changes of a receiver based on the data/information due to low performance of information generated by the transmitter (e.g., camera-based object recognition information) or an operating environment in which performance is degraded, such information may be reflected in a reliability value of the data/information. For example, as a contrary example, when a transmitter expects abrupt driving changes of a receiver based on the data/information because information generated by the transmitter has high performance and high reliability, such information may be reflected in a reliability value of the data/information.

For example, as an operational design domain (ODD) describing conditions under which an autonomous driving vehicle is designed to be safely operated, requirements related to an environment (e.g., time, segment, area, e.g., operable only on a highway on a clear day) and maneuvers (e.g., a left turn across traffic congestion is not allowed), and requirements under which data/information is used (e.g., weather, location) may be reflected in a reliability value of the data/information.

### (4) Continuity and coherence information of data/information

For example, continuity and coherence of information included in messages generated and propagated by the same transmitter may be evaluated and reflected in a reliability value. For example, this may indicate not only continuity and coherence with respect to short-term message generation and propagation, but also long-term continuity (or, availability) and consistency (or, reliability) such as uptime of communication equipment.

For example, when information included in a plurality of exchanged messages is continuous and coherent, a reliability value of data/information may be improved. For example, when values measured by a sensor are not included in a plurality of exchanged consecutive messages and are included discontinuously, a reliability value of data/information may be reduced. For example, when speed information of a vehicle is included and propagated in a plurality of messages, that is, when speed information of 16.67 m/s (t0), NULL (t1), NULL (t2), 16 m/s (t3), 15 m/s (t4), and 14 m/s (t5) is sequentially propagated based on six messages (from t0 to t5), since the t1 and t2 lack continuity, and thus a reliability value of data/information may be reduced. For example, when consistency of information included in a plurality of exchanged consecutive messages is low, that is, when there is an abrupt change, a reliability value of data/information may be reduced. For example, when speed information of a vehicle is included and propagated in messages, that is, when speed information of 16.67 m/s (t0), 15 m/s (t1), 5 m/s (t2), 16 m/s (t3), 50 m/s (t4), and 14 m/s (t5) is sequentially propagated based on six messages (from t0 to t5), since t2 and t4 lack coherence, and thus a reliability value of data/information may be reduced.

### (5) Information on a communication state

For example, when validity of information is low due to high communication latency, a reliability value of data/information may be reduced.

For example, communication states such as signal strength, connectivity, packet delivery success rate, and the number of retransmissions may be reflected in a reliability value of data/information.

For example, in reliability value evaluation factors, confidence with respect to data/information provided by an evaluation target (e.g., an information provider) and/or the evaluation target itself may be included based on a common reliability value evaluation criterion. That is, for example, when a standardized reliability value evaluation criterion exists, a data/information provider may measure/evaluate a reliability value in compliance with the standardized criterion, and/or a data/information user may measure/evaluate a reliability value in compliance with the standardized criterion. In addition, for example, a reliability value may be measured based on behavior and/or capability information of an evaluation target. For example, in measuring/evaluating a reliability value, an evaluation target may be a V2X message generator and/or an object that has generated information included in a message (e.g., when a camera of an RSU detects a pedestrian on a road and generates information, the evaluation target may be the RSU), and/or a message transfer entity (e.g., a server, MEC). In addition, for example, a reliability value serving as a basis for differential operation may consider subjective or objective factors related to exchanged data and characteristics of a transmitter, and may include existing security, authentication, and privacy technologies. In other words, for example, an entity that measures/evaluates a reliability value of V2X data/information may include a transmitter-side method in which a reliability value is measured/evaluated based on information generated by a transmitter (e.g., performance/specification of a sensor, a measurement environment, measurement conditions) and then transferred through a message, and/or a receiver-side method in which a reliability value is measured/evaluated based on data/information received by a receiver, and/or a method in which a reliability value of data/information is measured/evaluated by a third transfer entity/independent entity. In addition, for example, a transmitter and a receiver may be a UE-to-UE, a server-to-server, and/or a server-to-UE.

For example, a reliability value may be directly measured/evaluated on a transmitter side and transferred to a receiver. In this case, for example, when a method is mutually agreed upon by both a transmitter and a receiver, the method may be more effective. That is, for example, various manufacturers may aim to measure/evaluate a reliability value using the same method, and based on this, a transmitter may include information on how a receiver is expected to accept the information (e.g., an operation that the receiver may take after receiving the information), and a receiver may utilize received information based on the reliability value. For example, in order to enable a data/information user to determine whether received data may be used for an intended functionality by measuring/evaluating a reliability value on a transmitter side and transferring the reliability value to a receiver, a specific data element (e.g., a safety container) may be added to an exchanged message, or a reliability value of data/information may be transferred through a separate message.

For example, a reliability value may also be measured/evaluated by a receiver itself based on received information. In this case, for example, since agreement on reliability value measurement/evaluation criteria between a transmitter and a receiver or among V2X communication users may not be essential, measurement/evaluation criteria may differ for each manufacturer in implementation. In addition, for example, a capability to measure/evaluate a reliability value in real time simultaneously with message reception may be required.

For example, a reliability value may be measured/evaluated by a third independent entity other than a transmitter or a receiver. For example, the third independent entity may be a server, an RSU, or a certification authority.

A step of classifying a reliability value into multiple levels, configuring an operation corresponding to each classified reliability value, and performing differential operation according to a reliability value related to received V2X data/information may be as follows.

For example, a receiver may perform differential operation according to a reliability value in determining operation of a service/application/function of the receiver based on a measured/evaluated reliability value of a transmitter and/or received data/information. That is, for example, in a method in which a receiver operates a service/application/function differently according to a reliability value of data/information, an index/section value/threshold value for differential operation may be configured. In this case, for example, the index/section value/threshold value may be classified in various manners. For example, a reliability value may be defined/configured as two levels (e.g., classifying a reliability value between 0 and 1 into 0 or more and 0.5 or less, and greater than 0.5 and 1 or less), or three levels (e.g., classifying a reliability value between 0 and 1 into 0 or more and 0.33 or less, greater than 0.33 and 0.66 or less, and greater than 0.66 and 1 or less), or more reliability sections.

For example, a differential operation corresponding to each defined/configured reliability section may be configured, and a receiver may perform a differential operation related to a service/application/function that utilizes the data/information according to a reliability value of the received data/information. For example, the differentiated operations may be various, as in embodiment(s) described below.
1. An operation of reconfirming contents of received data/information based on a reliability value of a message/information through a receiver's sensor or a driver's perception

For example, when a reliability value of data/information is at a high level (e.g., when a reliability section is configured in two levels, a reliability value corresponding to a high reliability section), a service/application/function may be operated by omitting and/or simplifying an operation of reconfirming contents of the received data/information through a receiver's sensor or a driver's perception. Conversely, for example, when a reliability value of data/information is at a low level (e.g., when a reliability section is configured in two levels, a reliability value corresponding to a low reliability section), in performing a service/application/function, a preparatory operation and a reconfirmation operation may be performed so that contents of the received data/information may be perceived by a receiver's sensor or a driver. For example, when an RSU detects road users at an intersection and transfers information to a road user approaching the intersection, if a receiver (e.g., vehicle A) receives data/information including that there is no road user having a collision risk at the intersection and a high reliability value, a driving function may be operated (e.g., passing through the intersection) by omitting and/or simplifying an operation of reconfirming the data/information through a receiver's own sensor. In this case, for example, the intersection may be passed through at an appropriately high speed without deceleration or a driver's attention. For example, in a contrary case, when data/information including that there is a road user having a collision risk at the intersection and a high reliability value is transferred to a receiver, the receiver may appropriately decelerate and operate a driving function that respond to a collision (e.g., searching for an avoidance path) without reconfirmation through its own sensor. In addition, for example, when an RSU transmits data/information including that there is no road user having a collision risk at an intersection but a reliability value of the transmitted data/information is low, the receiver may proceed with driving normally after performing a preparatory operation to prepare for inaccuracy of the data/information through deceleration and an operation of reconfirming the received data/information through its own sensor.

For example, when a transmitter requests maneuver coordination to a receiver, the receiver may add an operation of checking requested maneuver coordination information according to a reliability value of received data/information. For example, when a transmitter (e.g., vehicle A) transmits, to a receiver (e.g., vehicle B), a maneuver coordination message (e.g., maneuver coordination message (MCM), maneuver sharing and coordination message (MSCM)) requesting or desiring a lane change in front of the receiver, the receiver may verify the received request message using its own sensor or may omit such verification based on a reliability value of the received message and the transmitter. For example, when a reliability value of the data/information is high, the receiver may respond to the maneuver coordination request (e.g., acceptance or rejection) without a confirmation operation. Conversely, for example, when a reliability value of the data/information is low, the receiver may add an operation of checking the maneuver coordination request (e.g., an operation of checking a position of a vehicle that has made the request).

2. Differentiation of an operational availability range of a receiver according to a reliability value of a message/information

For example, when a reliability value of data/information is at a high level (e.g., when a reliability section is configured in two levels, a reliability value corresponding to a high reliability section), an operational availability range of a service/application/function utilizing the received data/information may be maximized (e.g., rapid acceleration, deceleration, or direction change is allowed). Conversely, for example, when a reliability value of data/information is at a low level (e.g., when a reliability section is configured in two levels, a reliability value corresponding to a low reliability section), an operational availability range of a service/application/function utilizing the received data/information may be minimized or restricted (e.g., rapid acceleration, deceleration, or direction change is not allowed). For example, this may mean restriction of operation to cope with uncertainty of data/information. For example, when an RSU detects road users at an intersection and transfers information to a user approaching the intersection, if a receiver receives data/information including that there is no road user having a collision risk at the intersection and a high reliability value, in operating a corresponding service/application/function, rapid acceleration (e.g., acceleration of 8 km/h per second or more) may be allowed when accelerating from a low speed (e.g., 30 km/h). Conversely, for example, when a receiver receives data/information including that there is no road user having a collision risk at the intersection and a low reliability value, in operating a corresponding service/application/function, rapid acceleration (e.g., acceleration of less than 8 km/h per second) may be restricted when accelerating from a low speed (e.g., 30 km/h). For example, an operational availability range (e.g., allowing or restricting acceleration exceeding 8 km/h per second, deceleration exceeding 15 km/h per second, or direction change exceeding 10 deg/sec) may vary in consideration of characteristics of a receiver (e.g., type, mass, center of gravity, size, and dynamic performance including acceleration, deceleration, and steering).

3. Differentiation of intensity of a warning transferred to a driver according to a reliability value of a message/information

For example, when a reliability value of data/information is at a high level (e.g., when a reliability section is configured in two levels, a reliability value corresponding to a high reliability section), in operating a service/application/function that transfers a warning to a driver by utilizing received data/information, an intensity of the warning may be maximized (e.g., with a maximum intensity through a combination of at least two or more of visual, auditory, and tactile modalities). Conversely, for example, when a reliability value of data/information is at a low level (e.g., when a reliability section is configured in two levels, a reliability value corresponding to a low reliability section), in operating a service/application/function that transfers a warning to a driver by utilizing received data/information, an intensity of the warning may be limited (e.g., with an appropriate intensity through at least one of visual, auditory, and tactile modalities). For example, this may mean a warning operation that enables a driver to perceive a reliability value of data/information in a differentiated manner. For example, when an RSU detects road users at an intersection and transfers information to a user approaching the intersection, if a receiver receives data/information including that there is a road user having a collision risk at the intersection and a high reliability value, in operating a service/application/function that notifies the driver, a warning may be transferred in visual (e.g., displayed on an instrument cluster), auditory (e.g., voice guidance), and tactile (e.g., steering wheel vibration) manners. Conversely, for example, when a receiver receives data/information including that there is a road user having a collision risk at the intersection and a low reliability value from an RSU, in operating a service/application/function that notifies the driver, a warning may be transferred in a visual manner (e.g., displayed on an instrument cluster). For example, an intensity of a warning may be differentiated in various manners and combinations in consideration of implementation characteristics of a receiver. In addition, for example, a warning may be combined with a corresponding operation. For example, when a reliability value is low, only a warning may be provided to notify a driver, and when a reliability value is high, a warning and a corresponding operation such as emergency braking may be combined.

4. Differentiation of a receiver's perception reaction time (PRT) and/or transfer of autonomous driving control authority according to a reliability value of a message/information

For example, when a reliability value of data/information is at a high level (e.g., when a reliability section is configured in two levels, a reliability value corresponding to a high reliability section), in operating a service/application/function utilizing the received data/information, a timing at which the data/information is applied and/or a perception reaction time may be reduced (e.g., when a reaction time required to respond to the data/information is 2.5 seconds to 5 seconds, configuring the reaction time as 2.5 seconds). Conversely, for example, when a reliability value of data/information is at a low level (e.g., when a reliability section is configured in two levels, a reliability value corresponding to a low reliability section), in operating a service/application/function utilizing the received data/information, a timing at which the data/information is utilized and/or a perception reaction time may be increased (e.g., when a reaction time required to respond to the data/information is 2.5 seconds to 5 seconds, configuring the reaction time as 5 seconds). For example, when a reliability value of data/information is low, this may mean that a sufficient reaction time is configured in order to prepare for uncertainty of the data/information. For example, when an RSU detects road users on a road and transfers information to a receiver, if a reliability value of data/information received by the receiver driving at a high speed of 100 km/h is high, time/perception reaction time for utilizing services/applications/functions that utilize data/information may be configured as 10 seconds. For example, in an environment in which messages including a high reliability value are continuously received, the service/application/function may not be activated before the configured 10 seconds elapse, and may be activated when the configured time is reached. For example, this may mean that the receiver is capable of immediate response based on reliability of the data/information. Conversely, for example, when a reliability value of data/information received by a receiver driving at a high speed of 100 km/h is low, time/perception reaction time for utilizing services/applications/functions that utilize data/information may be configured as 20 seconds. For example, the service/application/function may be activated when the configured time is reached, and this may enable preparation for uncertainty of the data/information based on the increased perception reaction time. For example, in configuring a perception reaction time, when data/information received based on a reliability value is incorrect, a sufficient perception reaction time may be configured to ensure adequate handling.

For example, when a receiver is performing autonomous driving, a timing for transferring control authority to a driver or a remote operator by utilizing received data/information may be differentiated.

Embodiment(s) of the present disclosure may be classified, as follows, into differential operation methods according to a reliability value of data/information for each V2X message.
1. In a case of a state information message (Cooperative Awareness Message (CAM)/Basic Safety Message (BSM), Vulnerable road user Awareness Message (VAM)/Personal Safety Message (PSM), Collective Perception Message (CPM)/Sensor Data Sharing Message (SDSM))

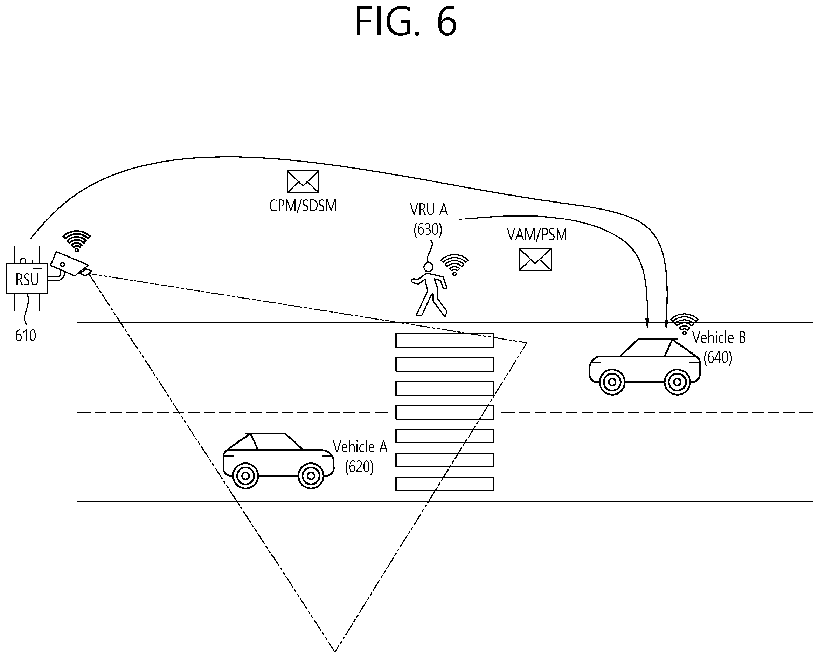

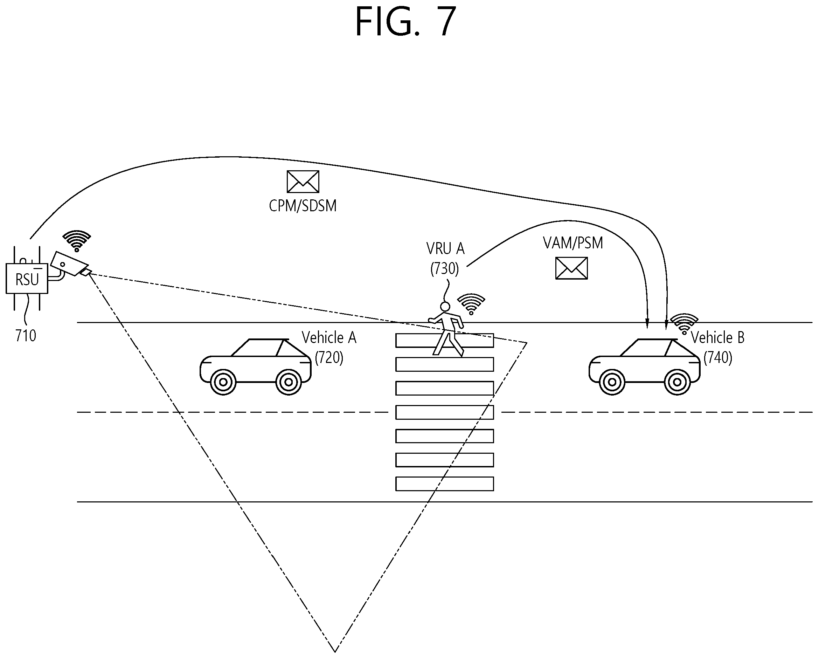

For example, messages for recognizing state information of road users may include Cooperative Awareness Message (CAM)/Basic Safety Message (BSM) in which a vehicle or the like directly transmits its own state information, Vulnerable road user Awareness Message (VAM)/Personal Safety Message (PSM) in which a pedestrian or the like transmits its own state information, and Collective Perception Message (CPM)/Sensor Data Sharing Message (SDSM) in which state information of an object sensed by a sensor is transmitted. Hereinafter, a differential operation method according to a reliability value of data/information related to a state information message will be described in more detail with reference to FIG. 6 and FIG. 7.

FIG. 6 shows a method in which an RSU disseminates sensor information on a road including a crosswalk, based on an embodiment of the present disclosure. The embodiment of FIG. 6 may be combined with various embodiments of the present disclosure.

Referring to FIG. 6, it may be considered that RSU 610 transfers, to a receiver vehicle B 640, state information of an object (e.g., vehicle A 620) driving from left to right on a road sensed by a camera through a V2X message of CPM/SDSM, and that a pedestrian (e.g., VRU A 630) waiting in front of a crosswalk transfers its own state information to the receiver (e.g., vehicle B 640) through a V2X message of VAM/PSM. For example, assuming a case in which a reliability value of data/information related to RSU 610 is measured/evaluated to be high (e.g., 0.9) due to artificial intelligence-based camera performance of RSU 610 and/or compliance with a high-quality product development process and/or an operating environment that does not degrade camera performance, and a reliability value of data/information related to VRU A 630 is measured/evaluated to be low (e.g., 0.3) due to performance of a positioning sensor (e.g., GNSS) mounted on a UE and/or an unfavorable measurement environment (e.g., weak signal caused by high-rise buildings), according to a reliability value of a message/information proposed in the present disclosure, the receiver (e.g., vehicle B 640) may differentially operate an operation of reconfirming contents of received data/information with a sensor of the receiver (e.g., a radar, a camera, a LiDAR mounted on vehicle B 640) according to a reliability value of the received message/information. For example, vehicle B 640 may classify reliability values into two levels in consideration of characteristics of the vehicle (e.g., size, mass, performance), and may configure a criterion for classifying reliability values as 0.5. For example, in the example described above, in a case of state information of vehicle A 620 having a high reliability value, the receiver (e.g., vehicle B 640) may omit or simplify an operation of decelerating or reconfirming the received data/information through its own sensor when traveling past vehicle A 620. On the other hand, for example, in a case of state information of VRU A 630, the receiver (e.g., vehicle B 640) may perform deceleration and an additional reconfirmation operation using its own sensor in consideration of a possibility that an error may occur in the information, even though VRU A 630 exists on a sidewalk rather than on a roadway and thus has a low collision risk, due to the low reliability value of the data/information.

FIG. 7 shows a method in which an RSU disseminates sensor information on a road including a crosswalk, based on an embodiment of the present disclosure. The embodiment of FIG. 7 may be combined with various embodiments of the present disclosure.

Referring to FIG. 7, a perception reaction time of a receiver may be differentially configured according to a reliability value of a message/information as follows. For example, assuming a case in which a reliability value of data/information of an object (e.g., vehicle A 720) driving to the left on a road sensed by a camera of RSU 710 is measured/evaluated to be high (e.g., 0.9), and a reliability value of data/information of a pedestrian (e.g., VRU A 730) is measured/evaluated to be low (e.g., 0.3), a perception reaction time (e.g., 5 seconds) for a forward collision warning may be configured in consideration of a relative value (e.g., position, speed) between the vehicle having a high reliability value (e.g., vehicle A 720) and a receiver (e.g., vehicle B 740). For example, due to the high reliability value of the data/information, even when the perception reaction time is configured to be short, a probability that an error occurs in the information is low, and thus sufficient perception reaction may be possible. On the other hand, for example, although relative values (e.g., relative position, relative speed, time to collision (TTC)) between the pedestrian (e.g., VRU A 730) having a low reliability value of data/information and the receiver (e.g., vehicle B 740) are more favorable than those of vehicle A 720, due to the low reliability value, a longer perception reaction time (e.g., 8 seconds) for a forward collision warning may be configured.

2. In a case of a map (MAP) and a signal information message (SPaT) provided by infrastructure/RSU

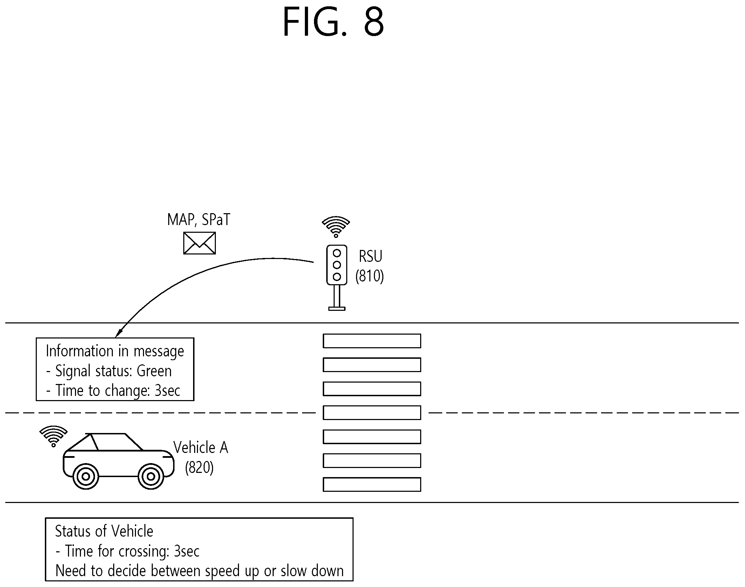

Hereinafter, a differential operation method according to a reliability value of data/information related to a map (MAP) and/or a signal information message (SPaT) will be described in more detail with reference to FIG. 8.

FIG. 8 shows a method using MAP and/or SPaT, based on an embodiment of the present disclosure. The embodiment of FIG. 8 may be combined with various embodiments of the present disclosure.

Referring to FIG. 8, an example in which a receiver receives map information and a signal information message from infrastructure/RSU and passes through an intersection may be used to explain differentiation of an operational availability range of the receiver according to a reliability value of a message/information. For example, the signal information message (SPaT) may include all current signal states of the intersection (e.g., a signal status of RSU 810 (e.g., a traffic light) being green) and time information during which the current signal is maintained (e.g., a time to change of RSU 810 (e.g., a traffic light) being 3 seconds). For example, when a reliability value of signal information data/information received by a receiver 820 is at a high level (e.g., 0.9), the receiver (e.g., vehicle A 820) may maximize an operational availability range of a driving function utilizing the received data/information (e.g., allowing rapid acceleration of 10 km/h per second or less, rapid deceleration of 20 km/h per second or less, and direction change of 10 deg/sec or less). On the other hand, for example, when a reliability value of the signal information data/information is at a low level (e.g., 0.4), an operational availability range of a driving function utilizing the received data/information may be restricted (e.g., allowing only acceleration of 8 km/h per second or less, deceleration of 10 km/h per second or less, and direction change of 8 deg/sec or less). Alternatively, for example, when signal information indicating that a signal remains green (e.g., passable) for 3 seconds before passing through an intersection is received, vehicle A 820 may require acceleration or deceleration to pass through the intersection based on its current state. For example, in a case of a vehicle with a driver, this may be based on a driving assistance notification (e.g., an operation recommendation/proposal of Green Light Optimal Speed Advisory (GLOSA)), and in a case of autonomous driving, this may be a direct operation. In this case, for example, assuming a situation in which vehicle A 820 is currently driving at a speed of 30 km/h and may pass through the intersection without a problem if accelerating at 10 km/h per second, when a reliability value of the data/information is high, vehicle A 820 may pass through the intersection by performing maximum acceleration. In addition, for example, vehicle A 820 may decelerate and stop in front of the intersection before the signal changes. Conversely, for example, when a reliability value of the data/information is low, due to a restricted operational availability range configuration, it may not be able to pass through the intersection through acceleration and may have to respond to the intersection signal through deceleration. For example, this may be intended to prevent accidents caused by abrupt operations by preparing for uncertainty of the received data/information (e.g., signal information).

3. In a case of a road information message (Decentralized Environmental Notification Message (DENM)/Road Safety Message (RSM)) related to a forward accident, traffic congestion, road construction, a pothole, or weather (e.g., a fog section)

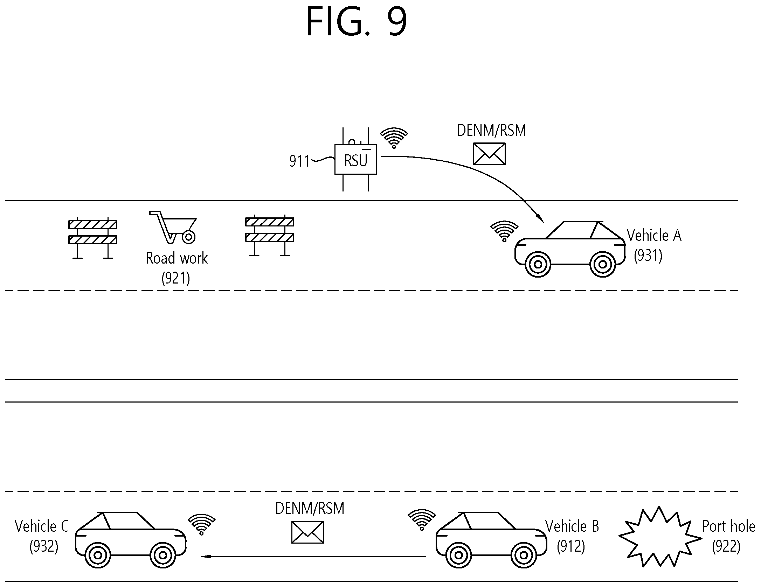

Hereinafter, a differential operation method according to a reliability value of data/information related to a road information message (DENM/RSM) will be described in more detail with reference to FIG. 9.

FIG. 9 shows a method in which an RSU transfers road construction information and/or a method in which a vehicle transfers pothole information, based on an embodiment of the present disclosure. The embodiment of FIG. 9 may be combined with various embodiments of the present disclosure.

Referring to FIG. 9, a method of differentiating an intensity of a warning transferred to a driver according to a reliability value of data/information included in a road information message may be described.

For example, assuming a case in which a reliability value of road construction information 921 on a road transmitted by RSU 911 is measured/evaluated to be high (e.g., 0.9), and a reliability value of pothole information 922 sensed by vehicle B 912 is measured/evaluated to be low (e.g., 0.3), according to the reliability value of the data/information, each receiver vehicle A 931 and vehicle C 932 may differentiate a method and/or a level of a warning delivered to a driver. For example, a warning notifying a risk of pothole information 922 having a low reliability value received by vehicle C 932 (see a lower part of FIG. 9) may be displayed as a visual warning on an instrument cluster and/or a display. On the other hand, for example, a warning notifying forward road construction information 921 having a high reliability value received by vehicle A 931 (see an upper part of FIG. 9) may be provided through a composite method based on an instrument cluster, a display, an auditory warning, and vibration, and an intensity of the warning (e.g., color, sound, vibration strength) may be increased.

4. In a case of a maneuver coordination message (MCM, MSCM)

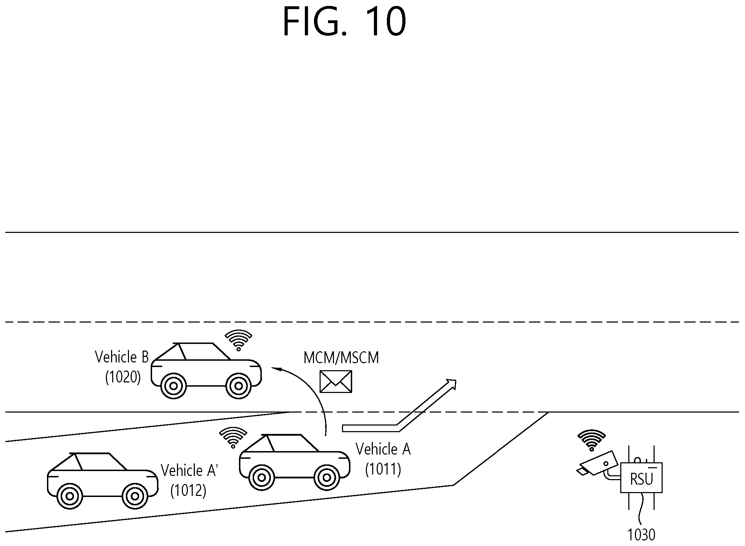

Hereinafter, a differential operation method according to a reliability value of data/information related to a maneuver coordination message (MCM, MSCM) will be described in more detail with reference to FIG. 10.

FIG. 10 shows a method using a maneuver coordination message, based on an embodiment of the present disclosure. The embodiment of FIG. 10 may be combined with various embodiments of the present disclosure.

Referring to FIG. 10, when a maneuver coordination message (MCM, MSCM) for cooperative driving is used, that is, when a transmitter (e.g., a cooperative driving requester) requests maneuver coordination to a receiver, a method may be described in which the receiver adds an operation of checking requested maneuver coordination information according to a reliability value of received data/information.

For example, when a transmitter (e.g., vehicle A 1011) transmits, to a receiver (e.g., vehicle B 1020), a maneuver coordination message (MCM, MSCM) requesting or desiring a lane change in front of the receiver for road entry, the receiver (e.g., vehicle B 1020) may verify or omit verification of the request message using its own sensor based on the received message and a reliability value of the transmitter, and/or may request or omit verification from surrounding road users or infrastructure 1030. For example, when a reliability value (e.g., 0.9) of data/information transmitted by vehicle A 1011 is high, vehicle B 1020 may respond to the maneuver coordination request (e.g., acceptance or rejection) without a confirmation operation. For example, in FIG. 10, since vehicle A 1011 is driving ahead of vehicle B 1020, vehicle B 1020 may accept the request of vehicle A 1011 in consideration of vehicle speed, etc. Conversely, for example, when a reliability value (e.g., 0.3) of data/information transmitted by vehicle A 1011 is low, the receiver (e.g., vehicle B 1020) may add an operation of checking the maneuver coordination request (e.g., an operation of checking a position of the vehicle that has made the request). For example, when vehicle A 1011 transmits a maneuver coordination message, if an inaccurate position is transmitted due to inaccuracy of a positioning sensor and/or intentionally, that is, although vehicle A 1011 is actually located at vehicle A' 1012 in FIG. 10, data/information is generated and transmitted as a position of vehicle A 1011, vehicle B 1020 may respond to the maneuver coordination message after directly or indirectly checking a state of vehicle A 1011.

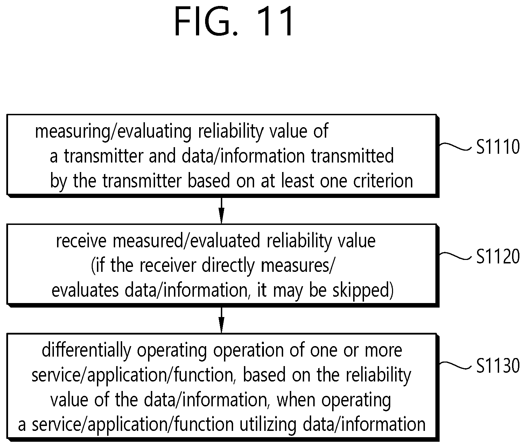

FIG. 11 shows a flow chart of a method of differentially performing a service/application/function according to a reliability value of data/information, based on an embodiment of the present disclosure. The embodiment of FIG. 11 may be combined with various embodiments of the present disclosure.

Referring to FIG. 11, in step S1110, a reliability value of a transmitter and data/information transmitted by the transmitter may be measured/evaluated based on at least one criterion. For example, an entity that measures/evaluates the reliability value of the data/information may be a transmitter that has transmitted the data/information (e.g., an information provider), a receiver of the data/information, or a third independent entity other than the transmitter and the receiver. For example, a criterion for measuring/evaluating the reliability value may be determined to be common to the transmitter and the receiver of the data/information. Alternatively, for example, a criterion for measuring/evaluating the reliability value may be determined based on a standardized evaluation method. For example, the criterion for measuring/evaluating the reliability value may include capability of a device that has generated the data/information, an environment in which the data/information is generated, capability of a device that has transmitted the data/information, etc. In step S1120, the measured/evaluated reliability value may be received. For example, when an entity that evaluates the reliability value of the data/information is not a receiver of the data/information but is a transmitter of the data/information or a third independent entity, the receiver may receive the measured/evaluated reliability value for the data/information from the transmitter or the third independent entity. In step S1130, in operating a service/application/function utilizing the data/information, based on the reliability value of the data/information, one or more services/applications/functions may be differentially performed. That is, for example, a receiver of the data/information may perform an operation of a service/application/function corresponding to a reliability value based on a reliability value related to the data/information measured/evaluated by the receiver itself (or a reliability value measured/evaluated by a transmitter or a third independent entity as in step S1120). For example, when services/applications/functions are configured for each of a plurality of reliability sections, the receiver of the data/information may determine a reliability section among the plurality of reliability sections in which the measured/evaluated reliability value of the data/information is included, and may perform a service/application/function configured for the reliability section in which the measured/evaluated reliability value of the data/information is included. In this case, for example, a service/application/function configured for the reliability section in which the measured/evaluated reliability value of the data/information is included may have a wider operable range or may require a smaller number of operations requesting reconfirmation of the data/information than a service/application/function configured for a reliability section other than the reliability section in which the measured/evaluated reliability value of the data/information is included.

According to various embodiments of the present disclosure, a reliability value of data/information included in exchanged messages may be measured/evaluated, an operation of a service/application/function of a receiver corresponding to a result value may be configured, and services/applications/functions may be performed differently according to a configured reliability value when a V2X data/message is received. That is, in order for traffic safety functions to be safely performed through information exchange using V2X communication, differential operation may be performed according to a reliability value of V2X data.

In addition, according to various embodiments of the present disclosure, in exchange and utilization of V2X messages/information, by operating services/applications/functions that use data/information received by a receiver in stages based on a measured/evaluated reliability value, preparation for uncertainty of data/information may be achieved, dangerous situations/elements that may occur due to utilization of inaccurate information may be prevented, safety may be ensured, and by performing services/applications/functions based on information having a high reliability value, functions may operate smoothly and traffic flow may be improved. In particular, for example, this may play a significant role in implementing autonomous driving functions that operate based on V2X data. In addition, for example, due to insufficient reliability of data/information among manufacturers, when using V2X messages transmitted from products developed and manufactured by different manufacturers, by applying the method proposed in the present disclosure, safety in operating functions of a receiver may be ensured, and hindrance to proliferation of V2X services may be partially resolved.

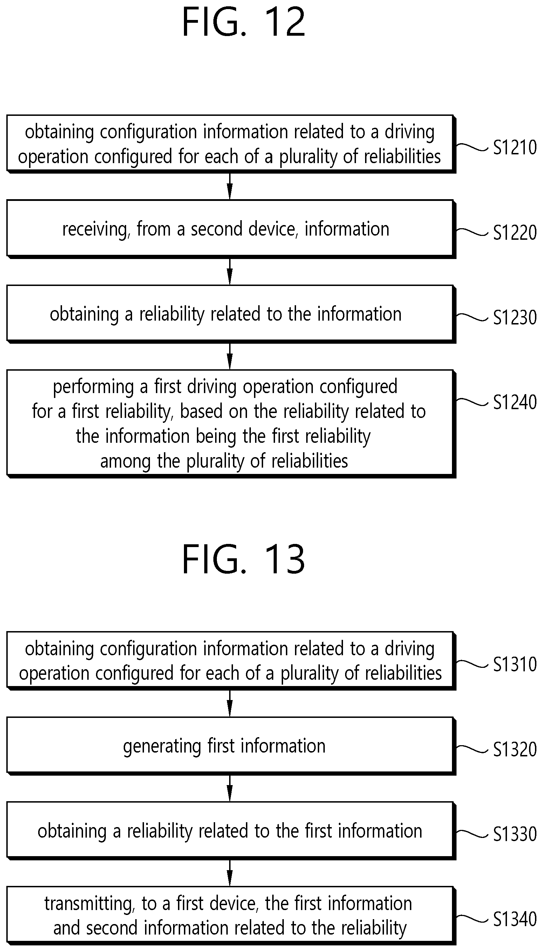

FIG. 12 shows a method for performing wireless communication by a first device, based on an embodiment of the present disclosure. The embodiment of FIG. 12 may be combined with various embodiments of the present disclosure.

Referring to FIG. 12, in step S1210, a first device may obtain configuration information related to a driving operation configured for each of a plurality of reliabilities. In step S1220, the first device may receive, from a second device, information. In step S1230, the first device may obtain a reliability related to the information. In step S1240, the first device may perform a first driving operation configured for a first reliability, based on the reliability related to the information being the first reliability among the plurality of reliabilities. For example, the reliability may be obtained based on at least one of a long-term evaluation factor or a short-term evaluation factor.

For example, based on the first reliability being higher than a second reliability among the plurality of reliabilities, a number of reconfirmation operations related to the first driving operation may be less than a number of reconfirmation operations related to a second driving operation configured for the second reliability.

For example, based on the first reliability being higher than a second reliability among the plurality of reliabilities, an operational availability range related to the first driving operation configured for the first reliability may be wider than an operational availability range related to the second driving operation configured for the second reliability.

For example, based on the first reliability being higher than a second reliability among the plurality of reliabilities, an intensity of a warning related to the first driving operation configured for the first reliability may be stronger than an intensity of a warning related to the second driving operation configured for the second reliability.

For example, based on the first reliability being higher than a second reliability among the plurality of reliabilities, a reaction time related to the first driving operation configured for the first reliability may be shorter than a reaction time related to the second driving operation configured for the second reliability.

For example, the long-term evaluation factor may include at least one of a capability of a sensor related to a generation of the information, a performance of communication module related to the second device, a level of system related to the first device, a level of system related to the second device, a safety integrity level-based development level of the first device or the second device, a level of error control related to the second device, a level of encryption related to the second device, a reputation related to the second device, or an evaluation of the second device related to interaction data.

For example, the short-term evaluation factor may include at least one of a processing level of the information, an environment in which a sensor related to a generation of the information operates, a condition for measurement of the sensor, a driving operation expected based on the information, a continuity of the information, a consistency of the information, or a communication state between the first device and the second device.

For example, the reliability related to the information generated by the second device may be obtained based on an evaluation of the second device based on at least one of the long-term evaluation factor or the short-term evaluation factor.

For example, the reliability related to the information may be obtained based on an evaluation of the first device based on at least one of the long-term evaluation factor or the short-term evaluation factor.

For example, the reliability related to the information may be obtained based on an evaluation of a third device based on at least one of the long-term evaluation factor or the short-term evaluation factor. And, for example, the third device may be at least one of a server, a road side unit (RSU) or a certification authority.

For example, the information may be transmitted, from the second device to the first device, based on at least one of state information message, map and signal information message, road information message, or maneuvering adjustment message.

For example, based on the reliability related to the information being included in a range related to the first reliability, the first driving operation configured for the first reliability may be performed. For example, based on a range related to a second reliability not overlapping with a range related to the first reliability among the plurality of reliabilities, the first driving operation other than a second driving operation configured for the second reliability is performed.

The proposed method may be applied to devices according to various embodiments of the present disclosure. First, a processor 102 of a first device 100 may control a transceiver 106 to obtain configuration information related to a driving operation configured for each of a plurality of reliabilities.

And, the processor 102 of the first device 100 may control the transceiver 106 to receive, from a second device, information. And, the processor 102 of the first device 100 may control the transceiver 106 to obtain a reliability related to the information. And, the processor 102 of the first device 100 may perform a first driving operation configured for a first reliability, based on the reliability related to the information being the first reliability among the plurality of reliabilities. For example, the reliability may be obtained based on at least one of a long-term evaluation factor or a short-term evaluation factor.

According to one embodiment of the present disclosure, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: obtaining configuration information related to a driving operation configured for each of a plurality of reliabilities; receiving, from a second device, information; obtaining a reliability related to the information; and performing a first driving operation configured for a first reliability, based on the reliability related to the information being the first reliability among the plurality of reliabilities. For example, the reliability may be obtained based on at least one of a long-term evaluation factor or a short-term evaluation factor.

According to one embodiment of the present disclosure, provided is a processing device configured to control a first device. The processing device may comprise: at least one processor; and at least one memory connected to the at least one processor and storing instructions. For example, the instructions, based on being executed by the at least one processor, cause the first device to perform operations comprising: obtaining configuration information related to a driving operation configured for each of a plurality of reliabilities; receiving, from a second device, information; obtaining a reliability related to the information; and performing a first driving operation configured for a first reliability, based on the reliability related to the information being the first reliability among the plurality of reliabilities. For example, the reliability may be obtained based on at least one of a long-term evaluation factor or a short-term evaluation factor.

According to one embodiment of the present disclosure, provided is a non-transitory computer-readable storage medium recording instructions. For example, the instructions, based on being executed, cause a first device to perform operations comprising: obtaining configuration information related to a driving operation configured for each of a plurality of reliabilities; receiving, from a second device, information; obtaining a reliability related to the information; and performing a first driving operation configured for a first reliability, based on the reliability related to the information being the first reliability among the plurality of reliabilities. For example, the reliability may be obtained based on at least one of a long-term evaluation factor or a short-term evaluation factor.

FIG. 13 shows a method for performing wireless communication by a second device, based on an embodiment of the present disclosure. The embodiment of FIG. 13 may be combined with various embodiments of the present disclosure.

Referring to FIG. 13, in step S1310, a second device may obtain configuration information related to a driving operation configured for each of a plurality of reliabilities. In step S1320, the second device may generate first information. In step S1330, the second device may obtain a reliability related to the first information. In step S1340, the second device may transmit, to a first device, the first information and second information related to the reliability. For example, the reliability is obtained based on at least one of a long-term evaluation factor or a short-term evaluation factor. And, for example, based on the reliability being a first reliability among the plurality of reliabilities, a first driving operation configured for the first reliability is performed.

The proposed method may be applied to devices according to various embodiments of the present disclosure. First, a processor 202 of a second device 200 may control a transceiver 206 to obtain configuration information related to a driving operation configured for each of a plurality of reliabilities. And, the processor 202 of the second device 200 may control the transceiver 206 to generate first information. And, the processor 202 of the second device 200 may control the transceiver 206 to obtain a reliability related to the first information. And, the processor 202 of the second device 200 may control the transceiver 206 to transmit, to a first device, the first information and second information related to the reliability. For example, the reliability is obtained based on at least one of a long-term evaluation factor or a short-term evaluation factor. And, for example, based on the reliability being a first reliability among the plurality of reliabilities, a first driving operation configured for the first reliability is performed.

According to one embodiment of the present disclosure, provided is a second device configured to perform wireless communication. The second device may comprise: at least one transceiver; at least one processor; and at least one memory connected to the at least one processor and storing instructions. For example, the instructions, based on being executed by the at least one processor, cause the second device to perform operations comprising: obtaining configuration information related to a driving operation configured for each of a plurality of reliabilities; generating first information; obtaining a reliability related to the first information; and transmitting, to a first device, the first information and second information related to the reliability. For example, the reliability is obtained based on at least one of a long-term evaluation factor or a short-term evaluation factor. And, for example, based on the reliability being a first reliability among the plurality of reliabilities, a first driving operation configured for the first reliability is performed.

According to one embodiment of the present disclosure, provided is a processing device configured to control a second device. The processing device may comprise: at least one processor; and at least one memory connected to the at least one processor and storing instructions. For example, the instructions, based on being executed by the at least one processor, cause the second device to perform operations comprising: obtaining configuration information related to a driving operation configured for each of a plurality of reliabilities; generating first information; obtaining a reliability related to the first information; and transmitting, to a first device, the first information and second information related to the reliability. For example, the reliability is obtained based on at least one of a long-term evaluation factor or a short-term evaluation factor. And, for example, based on the reliability being a first reliability among the plurality of reliabilities, a first driving operation configured for the first reliability is performed.

According to one embodiment of the present disclosure, provided is a non-transitory computer-readable storage medium recording instructions. For example, the instructions, based on being executed, cause a second device to perform operations comprising: obtaining configuration information related to a driving operation configured for each of a plurality of reliabilities; generating first information; obtaining a reliability related to the first information; and transmitting, to a first device, the first information and second information related to the reliability. For example, the reliability is obtained based on at least one of a long-term evaluation factor or a short-term evaluation factor. And, for example, based on the reliability being a first reliability among the plurality of reliabilities, a first driving operation configured for the first reliability is performed.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

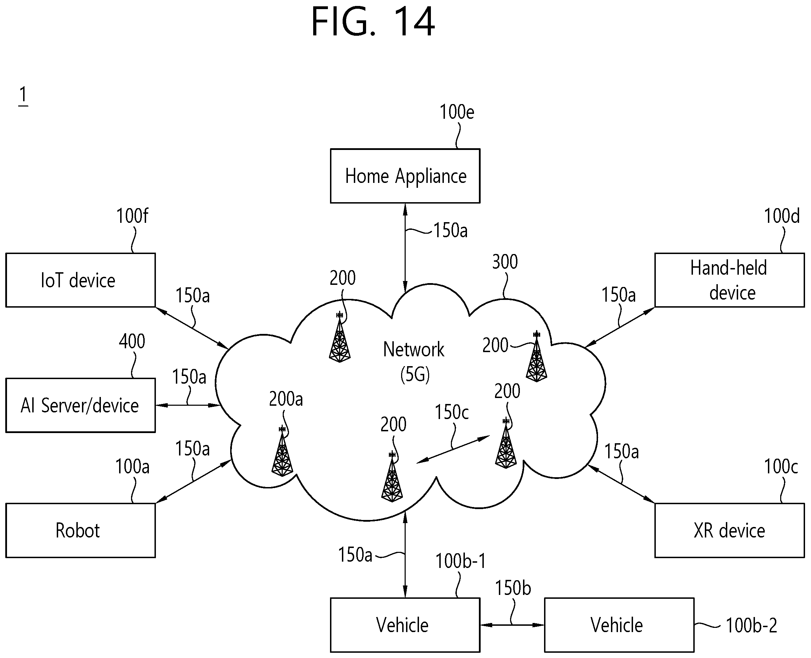

FIG. 14 shows a communication system 1, based on an embodiment of the present disclosure. The embodiment of FIG. 14 may be combined with various embodiments of the present disclosure.

Referring to FIG. 14, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

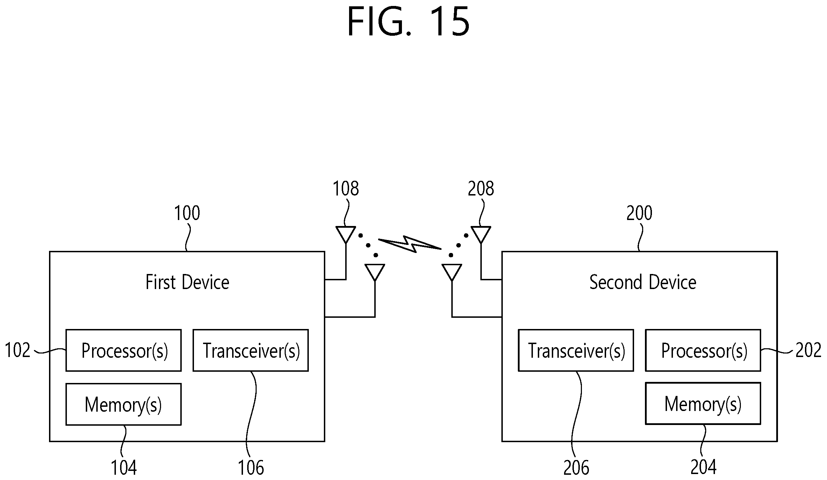

FIG. 15 shows wireless devices, based on an embodiment of the present disclosure. The embodiment of FIG. 15 may be combined with various embodiments of the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

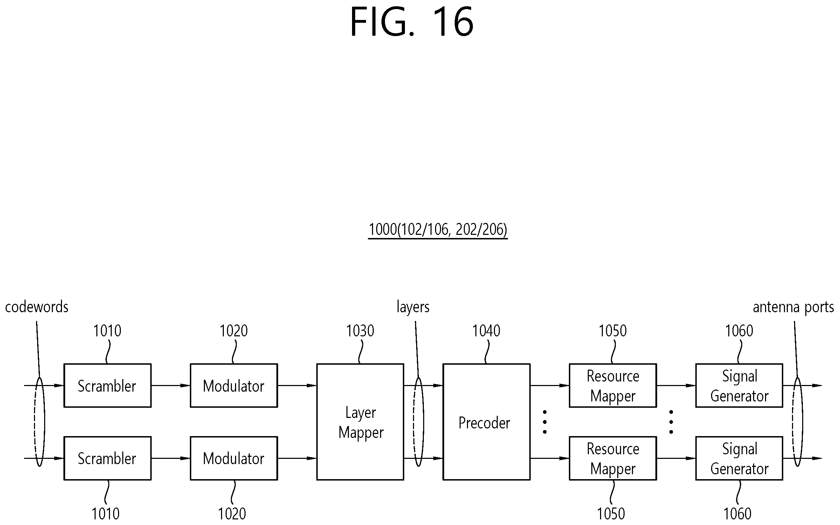

FIG. 16 shows a signal process circuit for a transmission signal, based on an embodiment of the present disclosure. The embodiment of FIG. 16 may be combined with various embodiments of the present disclosure.

Referring to FIG. 16, a signal processing circuit 1000 may include scramblers 1010, modulators 1020, a layer mapper 1030, a precoder 1040, resource mappers 1050, and signal generators 1060. An operation/function of FIG. 16 may be performed, without being limited to, the processors 102 and 202 and/or the transceivers 106 and 206 of FIG. 15. Hardware elements of FIG. 16 may be implemented by the processors 102 and 202 and/or the transceivers 106 and 206 of FIG. 15. For example, blocks 1010 to 1060 may be implemented by the processors 102 and 202 of FIG. 15. Alternatively, the blocks 1010 to 1050 may be implemented by the processors 102 and 202 of FIG. 15 and the block 1060 may be implemented by the transceivers 106 and 206 of FIG. 15.

Codewords may be converted into radio signals via the signal processing circuit 1000 of FIG. 16. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 16. For example, the wireless devices (e.g., 100 and 200 of FIG. 15) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

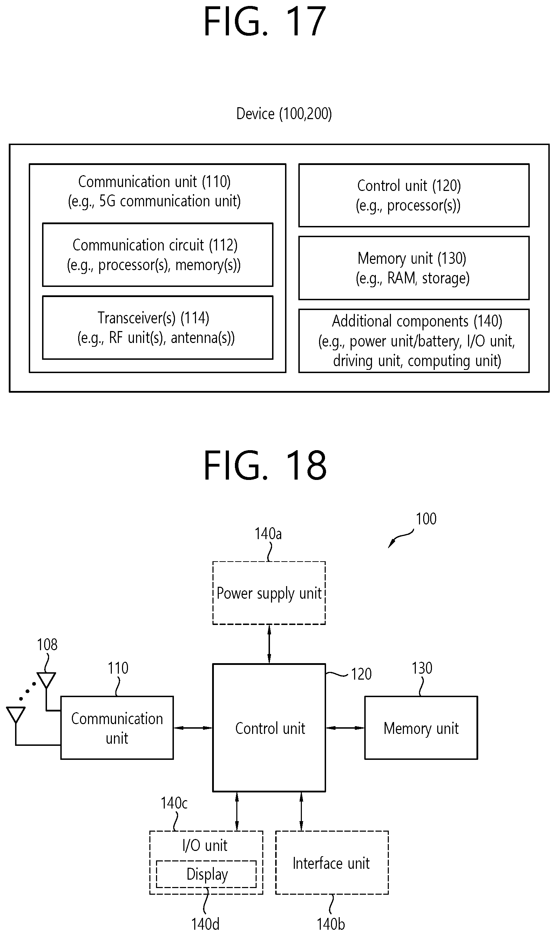

FIG. 17 shows another example of a wireless device, based on an embodiment of the present disclosure. The wireless device may be implemented in various forms according to a use-case/service (refer to FIG. 14). The embodiment of FIG. 17 may be combined with various embodiments of the present disclosure.

Referring to FIG. 17, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcast terminal, a hologram device, a public safety device, an MTC device, a medicine device, a fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 17, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 17 will be described in detail with reference to the drawings.

FIG. 18 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 18 may be combined with various embodiments of the present disclosure.

Referring to FIG. 18, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 17, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

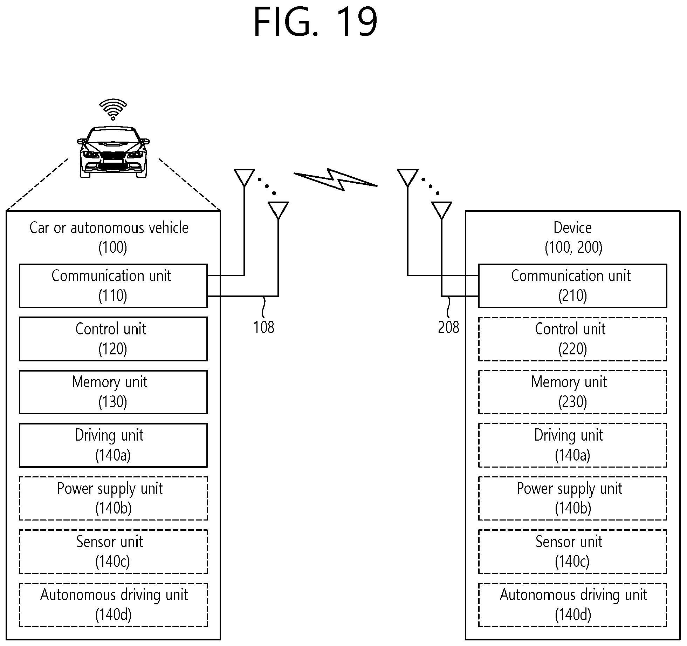

FIG. 19 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 19 may be combined with various embodiments of the present disclosure.

Referring to FIG. 19, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 17, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
obtaining configuration information related to a driving operation configured for each of a plurality of reliabilities;
receiving, from a second device, information;
obtaining a reliability related to the information; and
performing a first driving operation configured for a first reliability, based on the reliability related to the information being the first reliability among the plurality of reliabilities,
wherein the reliability is obtained based on at least one of a long-term evaluation factor or a short-term evaluation factor.

2. The method of claim 1, wherein, based on the first reliability being higher than a second reliability among the plurality of reliabilities, a number of reconfirmation operations related to the first driving operation is less than a number of reconfirmation operations related to a second driving operation configured for the second reliability.

3. The method of claim 1, wherein, based on the first reliability being higher than a second reliability among the plurality of reliabilities, an operational availability range related to the first driving operation configured for the first reliability is wider than an operational availability range related to the second driving operation configured for the second reliability.

4. The method of claim 1, wherein, based on the first reliability being higher than a second reliability among the plurality of reliabilities, an intensity of a warning related to the first driving operation configured for the first reliability is stronger than an intensity of a warning related to the second driving operation configured for the second reliability.

5. The method of claim 1, wherein, based on the first reliability being higher than a second reliability among the plurality of reliabilities, a reaction time related to the first driving operation configured for the first reliability is shorter than a reaction time related to the second driving operation configured for the second reliability.

6. The method of claim 1, wherein the long-term evaluation factor includes at least one of a capability of a sensor related to a generation of the information, a performance of communication module related to the second device, a level of system related to the first device, a level of system related to the second device, a safety integrity level-based development level of the first device or the second device, a level of error control related to the second device, a level of encryption related to the second device, a reputation related to the second device, or an evaluation of the second device related to interaction data.

7. The method of claim 1, wherein the short-term evaluation factor includes at least one of a processing level of the information, an environment in which a sensor related to a generation of the information operates, a condition for measurement of the sensor, a driving operation expected based on the information, a continuity of the information, a consistency of the information, or a communication state between the first device and the second device.

8. The method of claim 1, wherein the reliability related to the information generated by the second device is obtained based on an evaluation of the second device based on at least one of the long-term evaluation factor or the short-term evaluation factor.

9. The method of claim 1, wherein the reliability related to the information is obtained based on an evaluation of the first device based on at least one of the long-term evaluation factor or the short-term evaluation factor,

10. The method of claim 1, wherein the reliability related to the information is obtained based on an evaluation of a third device based on at least one of the long-term evaluation factor or the short-term evaluation factor, and
wherein the third device is at least one of a server, a road side unit (RSU) or a certification authority.

11. The method of claim 1, wherein the information is transmitted, from the second device to the first device, based on at least one of state information message, map and signal information message, road information message, or maneuvering adjustment message.

12. The method of claim 1, wherein, based on the reliability related to the information being included in a range related to the first reliability, the first driving operation configured for the first reliability is performed.

13. The method of claim 12, wherein, based on a range related to a second reliability not overlapping with a range related to the first reliability among the plurality of reliabilities, the first driving operation other than a second driving operation configured for the second reliability is performed.

14. A first device adapted to perform wireless communication, the first device comprising:
at least one transceiver;
at least one processor; and
at least one memory connected to the at least one processor and storing instructions that, based on being executed, cause the first device to perform operations comprising:
obtaining configuration information related to a driving operation configured for each of a plurality of reliabilities;
receiving, from a second device, information;
obtaining a reliability related to the information; and
performing a first driving operation configured for a first reliability, based on the reliability related to the information being the first reliability among the plurality of reliabilities,
wherein the reliability is obtained based on at least one of a long-term evaluation factor or a short-term evaluation factor.

15. A processing device adapted to control a first device to perform wireless communication, the processing device comprising:
at least one processor; and
at least one memory connected to the at least one processor and storing instructions that, based on being executed, cause the at least one processor to perform operations comprising:
obtaining configuration information related to a driving operation configured for each of a plurality of reliabilities;
receiving, from a second device, information;
obtaining a reliability related to the information; and
performing a first driving operation configured for a first reliability, based on the reliability related to the information being the first reliability among the plurality of reliabilities,
wherein the reliability is obtained based on at least one of a long-term evaluation factor or a short-term evaluation factor.

16. A non-transitory computer-readable storage medium recording instructions, the instruction, when executed, cause a first device to perform operations comprising:
obtaining configuration information related to a driving operation configured for each of a plurality of reliabilities;
receiving, from a second device, information;
obtaining a reliability related to the information; and
performing a first driving operation configured for a first reliability, based on the reliability related to the information being the first reliability among the plurality of reliabilities,
wherein the reliability is obtained based on at least one of a long-term evaluation factor or a short-term evaluation factor.

17. A method for performing wireless communication by a second device, the method comprising:
obtaining configuration information related to a driving operation configured for each of a plurality of reliabilities;
generating first information;
obtaining a reliability related to the first information; and
transmitting, to a first device, the first information and second information related to the reliability,
wherein the reliability is obtained based on at least one of a long-term evaluation factor or a short-term evaluation factor, and
wherein, based on the reliability being a first reliability among the plurality of reliabilities, a first driving operation configured for the first reliability is performed.

18. A second device adapted to perform wireless communication, the second device comprising:
at least one transceiver;
at least one processor; and
at least one memory connected to the at least one processor and storing instructions that, based on being executed, cause the second device to perform operations comprising:
obtaining configuration information related to a driving operation configured for each of a plurality of reliabilities;
generating first information;
obtaining a reliability related to the first information; and
transmitting, to a first device, the first information and second information related to the reliability,
wherein the reliability is obtained based on at least one of a long-term evaluation factor or a short-term evaluation factor, and
wherein, based on the reliability being a first reliability among the plurality of reliabilities, a first driving operation configured for the first reliability is performed.

19. A processing device adapted to control a second device to perform wireless communication, the processing device comprising:
at least one processor; and
at least one memory connected to the at least one processor and storing instructions that, based on being executed, cause the at least one processor to perform operations comprising:
obtaining configuration information related to a driving operation configured for each of a plurality of reliabilities;
generating first information;
obtaining a reliability related to the first information; and
transmitting, to a first device, the first information and second information related to the reliability,
wherein the reliability is obtained based on at least one of a long-term evaluation factor or a short-term evaluation factor, and
wherein, based on the reliability being a first reliability among the plurality of reliabilities, a first driving operation configured for the first reliability is performed.

20. A non-transitory computer-readable storage medium recording instructions, the instruction, when executed, cause a second device to perform operations comprising:
obtaining configuration information related to a driving operation configured for each of a plurality of reliabilities;
generating first information;
obtaining a reliability related to the first information; and
transmitting, to a first device, the first information and second information related to the reliability,
wherein the reliability is obtained based on at least one of a long-term evaluation factor or a short-term evaluation factor, and
wherein, based on the reliability being a first reliability among the plurality of reliabilities, a first driving operation configured for the first reliability is performed.
